# EUROPEAN PATENT SPECIFICATION

(11) **EP 3 426 892 B1**
(45) Date of publication and mention of the grant of the patent: **30.12.2020**
(21) Application number: 17711585.4
(22) Date of filing: 08.03.2017
(51) Int. Cl.: E21D 9/06, C09K 8/38

(54) **METHOD OF BORING THROUGH SUBTERRANEAN FORMATIONS**
VERFAHREN ZUM BOHREN DURCH UNTERIRDISCHE FORMATIONEN
PROCÉDÉ DE FORAGE DE FORMATIONS SOUTERRAINES

(30) Priority: 09.03.2016 IT UA20161500
(43) Date of publication of application: 16.01.2019
(73) Proprietor: Lamberti SPA, 21041 Albizzate (VA) (IT)
(72) Inventor: MORONI, Alessandro, 20015 Parabiago (MI) (IT); RICCABONI, Mauro, 20025 Legnano (IT); ZANGARINI, Nicola, 21040 Castronno (VA) (IT); LANGELLA, Valentina, 20155 Milano (MI) (IT); FLORIDI, Giovanni, 28100 Novara (IT); LI BASSI, Giuseppe, 21026 Gavirate (VA) (IT)
(74) Representative: Giaroni, Paola
(86) International application number: PCT/EP2017/055393
(87) International publication number: WO 2017/153449

(56) References cited:
- WO-A1-99/18330
- WO-A2-2006/108161
- DE-A1- 19 530 077
- FR-A1- 2 690 709
- US-B1- 7 134 497

## Description

### TECHNICAL FIELD

The invention relates to a method of underground boring utilizing a shield boring machine and a foamed aqueous composition.

### BACKGROUND OF THE ART

Shield boring machines (SBM) are increasingly used in the boring through subterranean formations, for example for the excavation of a tunnel, because they offer many advantages such as the ability to safely and quickly bore in a wide variety of strata. A shield boring machine comprises a circular rotatable cutting head mounted on a cylindrical shield of similar diameter such that its axis of rotation coincides with the longitudinal axis of the shield. Within the shield there are contained all the mechanical, electromechanical and electronic systems necessary for the machine operations together with means for feeding materials to the cutting head and means for conveying away the soil, typically with screw and belt conveyors. SBM have the advantage of minimizing the variations of the pressure field of the subterranean formation avoiding damages to the above structures and allowing to significantly reduce the tunnel construction time and consequently the costs of realization, making them suitable to use in heavily urbanized areas.

They can be used through anything from hard rock to sand, but there is not a machine which is suitable for all kind of soil. For this reason, different kinds of shield boring machine have been developed.

For example, for soft, cohesive soils shield boring machines with earth pressure support are a preferred option. The so called Earth Pressure Balance Machines (EPBM) turn the excavated material into a soil paste that is used as pliable, plastic support medium for the cutting head. However EPBM are not considered suitable for use in very stiff clays, in which open face boring machines can be used, with compressed air to control water inflows when more permeable soils are encountered; nor in sands and gravels, which are too permeable and cannot form a plastic mass, where slurry shield machines become the norm.

However, the application range of the boring machines can be enhanced tremendously by soil conditioning. This means changing the plasticity, texture and water permeability of the soil by injecting various conditioning agents, allowing boring to be more quickly effected and to remove the soil more easily.

Known conditioning agents include bentonite slurries and polymer suspensions. However they can create problems in certain soils, largely because they increase the soil water content appreciably. Some soils (such as clays) can become sticky and difficult to remove and clog up the cutting head, resulting in a substantial loss in efficiency.

In a more recent development, foams have been suggested as conditioning agent, preferably in combination with the EPBM. These foams allow to transform the excavated soil, within the excavation chamber, in a low-density homogeneous mass avoiding the the segregation of the coarser parts that would cause the malfunction of the screw conveyor and the loss of support for the cutting head. Moreover they have the advantage that considerably less fluid is applied on the soil per given volume and the torque frictions and heat into the head of the SBM are sensibly reduced.

A typical formulation for producing foam will comprise beside the foaming agent, typically a surfactant, a foam stabilizing agent (foam stabilizer). In fact the foam is, by its nature, "metastable" and the foam stabilizing agent help to maintain it stable for a predictable long period. These are two key parameters. In fact when working with a EPBM, for example, it is important to know the total period for which a foam would be stable in the foam-soil mixture in the working chamber and screw conveyor. Beyond this period the system may collapse, causing loss of workability in the material to be excavated and destabilizing and possibly catastrophic loss of the earth pressure balance plug.

Many different polymers, both synthetic and natural, have been suggested for the use as foam stabilizing agents in foam shield boring.

In WO 93/22538, the Applicant describes a foaming agent for earth pressure shield tunneling which may also comprise one or more (co)polymers, natural or synthetic, such as polyalkylene glycols, polysaccharides, proteins, and (co)polymers comprising acrylic, methacrylic, acrylamide, carboxylic and/or vinyl units, such as polyvinyl alcohols.

US 6,485,233, corresponding to WO 99/18330, relates to a method of boring a tunnel through a stratum by means of a shield tunneling apparatus, the method comprising the step of injecting into the stratum at the cutting face of an aqueous material comprising: (a) from 0.005 to 0.05% by weight of a polyethylene oxide of weight-average molecular weight from 2,000,000 to 8,000,000 and (b) from 0.05 to 0.5% by weight of a polyoxyalkylene alkyl ether sulfate surfactant and, optionally, a foam booster.

US 6,802,673 relates to a process of boring a tunnel using an earth-pressure balance shield boring tunnelling machine wherein there is injected into a stratum being bored at the cutting head a foamed aqueous solution, characterized in that the aqueous solution contains: (i) a sulfate- or sulfonate-containing anionic surfactant, and (ii) beta-naphthalene sulfonate-formaldehyde condensate.

Also polysaccharides and polysaccharide derivatives have been widely used as foam stabilizing agents.

WO 2005/021932 describes the use of a foaming composition comprising guar gum, carboxymethyl cellulose, alginic acid or mixtures thereof in foam shield tunnelling.

US 5,808,052 relates to water-soluble, particularly ternary, preferably ionic, cellulose mixed ethers, more particularly to anionic water-soluble cellulose mixed ethers, as additives for drilling fluids, wherein the drilling is preferably effected by earth pressure shield technique.

EP 0 761 747 claims a composition comprising at least one non-ionic, at least one ionic hydrocolloid, both chosen in particular among polysaccharide ethers, and at least one surface active material.

The composition can be used as foaming agent in tunnel construction, in particular when shield tunneling techniques are employed.

Biopolymers, such a xanthan gum, are further examples of foam stabilizers.

Now it has been discovered that cationic tamarind gum can increase foam production and extend its duration more than these prior art foam stabilizers.

As far as the Applicant knows, cationic tamarind gum has never been proposed and described in the previous literature as foam stabilizing agent.

### SUMMARY OF THE INVENTION

It is therefore an object of the present invention a method of boring through subterranean formations utilizing a shield boring machine, said method comprising the use of a foamed aqueous composition comprising:
(a) from 0.002 to 4.0 % by weight (% wt) of a cationic tamarind gum and
(b) from 0.05 to 6.0 % by weight of a surfactant.

### DETAILED DESCRIPTION OF THE INVENTION

Preferably, said aqueous composition comprises: (a) from 0.005 to 3.0 % wt of a cationic tamarind gum and (b) from 0.1 to 5 % wt of a surfactant. More preferably, the composition comprises: (a) from 0.01 to 1.0 % wt of a cationic tamarind gum and (b) from 0.15 to 3 % wt of a surfactant. Typically, the aqueous composition of the invention comprises at least 80% wt, preferably at least 90 % wt, of water.

Preferably, the cationic tamarind gum of the invention has a cationic degree of substitution (DS_{cat}) comprised between 0.01 and 1.0 and a Brookfield® RV viscosity at 4.0 % wt water solution, 20 rpm and 20 °C below 2000 mPa*s.

More preferably, the cationic tamarind gum has a DS_{cat} comprised between 0.05 and 0.55 and a Brookfield® RV viscosity, measured at 20 °C and 20 rpm in a 4.0 % by weight water solution, comprised between 15 and 1500 mPa*s.

In the present text, with the expression "cationic degree of substitution", we mean the average number of hydroxyl groups substituted with a cationic group on each anhydroglycosidic unit of the polysaccharide determined by means of ¹H-NMR.

Tamarind (Tamarindus Indica) is a leguminous evergreen tall tree which grows in the tropics. Tamarind gum (tamarind powder or tamarind kernel powder) is obtained by extracting and purifying the powder obtained by grinding the seeds of tamarind.

Tamarind gum is a complex mixture containing a xyloglucan polysaccharide (55-75 % wt), proteins (16-22 %wt), lipids (6-10 % wt) and certain minor constituents such as fibres and sugar.

The polysaccharide backbone consists of D-glucose units joined with (1-4)-β-linkages similar to that of cellulose, with a side chain of single xylose unit attached to every second, third and fourth of D-glucose unit through α-D-(1-6) linkage. One galactose unit is attached to one of the xylose units through β-D-(1-2) linkage.

There are basically two different grades of tamarind gum which are used in specific industrial applications like textile and pharmaceutical industries: oiled tamarind kernel powder and the de-oiled tamarind kernel powder. Both are useful for the realization of the present invention. Other tamarind gums which have been subjected to other kind of treatment, such as enzymatic treatments or physico-chemical treatments, are also useful for the realization of the present invention.

The tamarind gum suitable for obtaining the cationic derivative of the invention has preferably a Brookfield® RV viscosity, measured at 25 °C and 20 rpm on a 5.0 % wt water solution, comprised between 100 and 30,000 mPa*s.

The cationization of polysaccharides is well known in the art. Cationic substituents can be introduced on the tamarind gum by reaction of part of the hydroxyl groups of the xyloglucan gum with cationization agents, such as tertiary amino or quaternary ammonium alkylating agents. Examples of quaternary ammonium compounds include, but are not limited to, glycidyltrialkyl ammonium salts, 3-halo-2-hydroxypropyl trialkyl ammonium salts and halo-alkyltrialkyl ammonium salts, wherein each alkyl can have, independently one of the other, from 1 to 18 carbon atoms. Examples of such ammonium salts are glycidyltrimethyl ammonium chloride, glycidyltriethyl ammonium chloride, gylcidyltripropyl ammonium chloride, glycidylethyldimethyl ammonium chloride, glycidyldiethylmethyl ammonium chloride, and their corresponding bromides and iodides; 3-chloro-2-hydroxypropyl trimethyl ammonium chloride, 3-chloro-2- hydroxypropyltriethyl ammonium chloride, 3-chloro-2-hydroxypropyltripropyl ammonium chloride, 3-chloro-2-hydroxypropylethyldimethyl ammonium chloride, 3-chloro-2-hydroxypropylcocoalkyldimethyl ammonium chloride, 3-chloro-2-hydroxypropylstearyldimethyl ammonium chloride and their corresponding bromides and iodides.

Examples of halo-alkyltrialkyl ammonium salts are 2-bromoethyl trimethyl ammonium bromide, 3-bromopropyltrimethyl ammonium bromide, 4-bromobutyltrimethyl ammonium bromide and their corresponding chlorides and iodides.

Quaternary ammonium compounds such as halides of imidazoline ring containing compounds may also be used.

In the typical embodiments of the invention the cationizing agent is a quaternary ammonium compound and preferably is 3-chloro-2-hydroxypropyltrimethyl ammonium chloride. The cationic substituent is in this case a chloride of a 2-hydroxy-3-trimethylammonium propyl ether group.

The cationic tamarind gum of the invention may also contain further substituent groups such as hydroxyalkyl substituents, wherein the alkyl represents a straight or branched hydrocarbon moiety having from 1 to 5 carbon atoms (e.g., hydroxyethyl, or hydroxypropyl, hydroxybutyl) or hydrophobic substituents or carboxyalkyl substituents or combinations thereof.

The process for introducing a hydroxyalkyl substituent on a polysaccharide is well known in the art.

Typically, the hydroxyalkylation of a polysaccharide is obtained by the reaction with reagents such as alkylene oxides, e.g. ethylene oxide, propylene oxide, butylene oxide and the like, to obtain hydroxyethyl groups, hydroxypropyl groups, or hydroxybutyl groups, etc.

The hydroxyalkyl cationic tamarind gum may have a hydroxyalkyl molar substitution (MS) comprised between 0.1 and 3.0, preferably between 0.1 and 2.0, more preferably between 0.1 and 1.5.

With the expression "hydroxyalkyl molar substitution", we mean the average number of hydroxyalkyl substituents on each anhydroglycosidic unit of the polysaccharide measured by means of ¹H-NMR.

The hydrophobization of the cationic tamarind gum of the invention is achieved by the introduction of hydrophobic group.

Examples of the introduction of hydrophobic groups on polysaccharides are reported in EP 323 627 and EP 1 786 840.

Typical derivatizing agents bringing a hydrophobic group include linear or branched C₂-C₂₄ alkyl and alkenyl halides, linear or branched alkyl and alkenyl epoxides containing a C₆-C₂₄ hydrocarbon chain and alkyl and alkenyl glycidyl ethers containing a C₄-C₂₄ linear or branched hydrocarbon chain.

A suitable glycidyl ether hydrophobizing agent can be, for example, butyl glycidyl ether, t-butyl glycidyl ether, 2-ethylhexyl glycidyl ether, dodecyl glycidyl ether, hexadecyl glycidyl ether, behenyl glycidyl ether and nonylphenyl glycidyl ether.

Representative alkyl epoxides include but are not limited to 1,2-epoxy hexane, 1,2-epoxy octane, 1,2-epoxy decane, 1,2-epoxy dodecane, 1,2-epoxy tetradecane, 1,2-epoxy hexadecane, 1,2-epoxy octadecane and 1,2-epoxy eicosane.

Exemplary halide hydrophobizing agents include but are not limited to ethyl, propyl, isopropyl, n-butyl, t-butyl, pentyl, neopentyl, hexyl, octyl, decyl, dodecyl, myristyl, hexadecyl, stearyl and behenyl bromides, chlorides, and iodides.

Other derivatizing agents suitable for the hydrophobic modification include alkyl- and alkenyl-β-hydroxy-γ-chloropropyl ethers and epoxy derivatives of triglycerides.

In a preferred embodiment of the invention the cationic substituent is 2-hydroxy-3-trimethylammoniumpropyl ether chloride and the hydrophobic substituent contains a linear alkyl or alkenyl chain containing between 6 and 24 carbon atoms or a mixture of such alkyls or alkenyls.

The hydrophobically modified cationic tamarind gum of the invention may have hydrophobic degree of substitution (DS_{H}) of from 1_{*}10⁻⁵ to 5_{*}10⁻¹, preferably from 1_{*}10⁻⁴ to 1_{*}10⁻¹.

With the expression "hydrophobic degree of substitution", we mean the average number of hydrophobic substituents on each anhydroglycosidic unit of the polysaccharide measured by means of gas-chromatography or ¹H-NMR.

In a further particular embodiment the cationic tamarind gum of the invention can contain both hydroxyalkyl substituents and hydrophobic substituents. In this case the MS is comprised between 0.1 and 3.0 and the DS_{H} is between 1_{*}10⁻⁵ and 5_{*}10⁻¹.

In another embodiment the cationic tamarind gum of the invention is carboxyalkylated, with a degree of carboxyalkyl substitution (DS_{AN}) ranging from 0.01 to 1.0.

With the expression "carboxyalkyl degree of substitution", we mean the average number of hydroxyl groups substituted with a carboxyalkyl group on each anhydroglycosidic unit of the polysaccharide measured by means of titration.

Halo-carboxylic acids or their salts can be used for the preparation of carboxyalkyl cationic tamarind gum. The preferred halo-carboxylic acid is monochloro-acetic acid.

The cationic tamarind gum of the present invention can be prepared by known processes. For example, the cationic substituents can be introduced by reaction of the tamarind gum with the cationizing agent, in the presence of a base, such as sodium hydroxide.

The introduction of the different substituents (cationic, carboxyalkyl hydroxyalkyl and/or hydrophobic) on the tamarind gum backbone can follow any order.

When the cationic tamarind gum of the invention also contains hydroxyalkyl substituents, they may also be introduced in the last step, after the cationization and the optional hydrophobization have occurred. In an exemplary production process, the cationic tamarind gum is obtained operating as follows: tamarind gum, possibly dispersed in water or an inert diluent which can be chosen among lower aliphatic alcohols, ketones, or liquid hydrocarbons, or mixtures of the above, is treated at ambient temperature with an alkali-hydroxide in aqueous solution and then heated to 50-90 °C. The reaction mass system is then set to about 50 °C and the cationizing agent and the optional hydroxyalkylating agents, for example ethylene oxide and/or propylene oxide, or carboxyalkylating and/or hydrophobizing agents, are introduced into the reactor, possibly dispersed in inert organic diluents. The reaction is completed by setting the temperature at 40-80 °C for 1-3 hours.

In one embodiment of the invention, the cationic tamarind gum is subjected to an additional treatment with a base after the cationization, that allows to produce cationic polysaccharide derivatives free from toxic compounds, such as 3-chloro-2-hydroxypropyltrimethyl ammonium chloride or 2,3-epoxypropyltrimethyl ammonium chloride. This post-cationization treatment is described more accurately in the patent application WO 2014/027120.

After the preparation, the cationic tamarind gum can be modified by treatment with reagents, such as caustic and acids; or it can be oxidated with biochemical oxidants, such as galactose oxidase; or it can be depolymerized with chemical oxidants, such as hydrogen peroxide, or with enzymatic reagents. Reagents such as sodium metabisulfite or inorganic salts of bisulfite may also be optionally utilized.

In another embodiment, the cationic tamarind gum is modified by physical methods using high speed agitation machines or thermal methods.

Combinations of these reagents and methods can also be used. These modifications can be also performed on the tamarind gum before the derivatization process.

In a preferred embodiment, the cationic tamarind gum is a depolymerized cationic tamarind gum, which has been depolymerized by using chemicals, such as hydrogen peroxide, or cellulase enzymes.

In a further embodiment, after the cationic derivatization a purification of the tamarind gum can be performed to obtain a particularly pure suitable product.

The purification step may take place by extraction of the impurities with water or aqueous-organic solvent before a final drying step so as to remove the salts and by-products formed during the reaction.

In a further preferred embodiment, the cationic tamarind gum of the present invention is left unpurified (usually called "crude" or technical grade) and still contains by-products generated during its chemical preparation (that is during cationization of the tamarind gum and the other possible derivatizations).

This unpurified cationic tamarind gum can contain from 4 to 65 % by dry weight of by-products, such as cationizing agents and their degradation products, for example 2,3-dihydroxypropyltrimethyl ammonium chloride, inorganic salts deriving from the neutralization of the bases used for the reaction, glycols and polyglycols deriving from the alkylene oxides, etc.

In a particularly preferred embodiment of the invention, the cationic tamarind gum contains only cationic substituents and has a DS_{cat} comprised between 0.1 and 0.45 and a Brookfield® RV viscosity, measured at 20°C and 20 rpm in a 4.0 % by weight water solution, comprised between 100 and 1000 mPa*s.

In the method of the invention, anionic, cationic, non-ionic, ampholytic surfactants and mixtures thereof can be used as the surfactant b). Suitable surfactants are, for example, nonionic emulsifiers and dispersants, such as:
- polyalkoxylated, preferably polyethoxylated, saturated and unsaturated aliphatic alcohols, having 8 to 24 carbon atoms, deriving from the corresponding fatty acids or from petrochemical products, and having 1 to 100, preferably 4 to 40, ethylene oxide units (EO);
- polyalkoxylated, preferably polyethoxylated, arylalkylphenols, such as, for example, tristyrylphenol having an average degree of ethoxylation of between 8 and 80, preferably between 16 and 40;
- polyalkoxylated, preferably polyethoxylated, alkylphenols having one or more alkyl radicals, such as, for example, nonylphenol or tri-sec-butylphenol, with a degree of ethoxylation of between 2 and 40, preferably between 4 and 20;
- polyalkoxylated, preferably polyethoxylated, hydroxy-fatty acids or glycerides of hydroxy-fatty acids, such as, for example, castor oil, having a degree of ethoxylation of between 10 and 80;
- sorbitan or sorbitol esters with fatty acids or polyalkoxylated, preferably polyethoxylated, sorbitan or sorbitol esters;
- polyalkoxylated, preferably polyethoxylated, amines;
- di- and tri-block copolymers, for example from alkylene oxides, for example from ethylene oxide and propylene oxide, having average molecular weight between 200 and 8000 g/mol, preferably between 1000 and 4000 g/mol;
- alkylpolyglycosides or polyalkoxylated, preferably polyethoxylated, alkylpolyglycosides.

Preferred nonionic surfactants are polyethoxylated alcohols, preferably from renewable resources, such as ethoxylated (4-8 EO) C₁₂-C₁₄ natural alcohol; polyethoxylated triglycerides of hydroxy-fatty acids and ethylene oxide/propylene oxide block copolymers.

Anionic surfactants are also suitable, for example:
- polyalkoxylated, preferably polyethoxylated, surfactants which are ionically modified, for example by conversion of the terminal hydroxyl function of the alkylene oxide block into a sulfate or phosphate ester;
- alkali metal and alkaline earth metal salts of alkylarylsulfonic acids having a straight-chain or branched alkyl chain;
- alkali metal and alkaline earth metal salts of sulfate or phosphate ester of C₈-C₂₄ saturated and unsaturated aliphatic alcohols;
- alkali metal and alkaline earth metal salts of C₈-C₂₄ alfa-olefin sulfonate;
- alkali metal and alkaline earth metal salts of paraffin-sulfonic acids and chlorinated paraffin-sulfonic acids;
- polyelectrolytes, such as lignosulfonates, condensates of naphthalene sulfonate and formaldehyde, polystyrenesulfonates or sulfonated unsaturated or aromatic polymers;
- anionic esters of alkylpolyglycosides, such as those described in WO 2010/100039, for example alkylpolyglucoside sulfosuccinate or citrate;
- salts of sulfosuccinic acid, which are esterified once or twice with linear, or branched aliphatic, cycloaliphatic and/or aromatic alcohols, or sulfosuccinates which are esterified once or twice with (poly)alkylene oxide adducts of alcohols.

Examples of cationic and ampholytic surfactants are quaternary ammonium salts, alkyl amino acids, and betaine or imidazoline amphotensides.

In a preferred embodiment, the surfactant is an anionic surfactant. Preferred anionic surfactants are, for example, polyalkoxylated, preferably polyethoxylated, surfactants which are ionically modified; alkali metal and alkaline earth metal salts of sulfate or phosphate ester of C₈-C₂₄ saturated and unsaturated aliphatic alcohols, and mixture thereof.

In another embodiment, the surfactant is a cationic surfactant and in particular a betaine amphotenside.

According to a preferred embodiment of the invention, the aqueous composition of the method of the invention comprises from 0.01 to 10 % wt of a foam booster, which can be chosen among long chain alkyl alcohols, such as linear C₈-C₂₂ alcohols, long chain N-amine oxides, glycols, glycol ethers and mixtures thereof. Specific examples are: n-dodecyl alcohol, n-tetradecyl alcohol, n-hexadecyl alcohol, cetyl alcohol, N-lauramine oxide, N-myristamine oxide, hexylene glycol, diethylene glycol monobutyl ether, triethylene glycol monobutyl ether, and mixtures thereof.

In a further embodiment of the invention, the aqueous composition comprises from 0.001 to 1 % by weight of a rheology modifier. Any kind of rheology modifier commonly used in the field can be used for the realization of the present invention, for example an acrylamide (co)polymer, a xanthan gum, a guar gum and the like.

Optionally, the aqueous composition may also include other additives, such as lubricants, corrosion inhibitors, biocides, complexing agents and mixture thereof.

Usually, the aqueous composition of the invention have a Brookfield@ LV viscosity, at 10 rpm and 20 °C, comprised between 2 and 500 mPa*s, preferably between 5 and 400 mPa*s.

The aqueous composition according to the method of the invention may be provided as two separated ingredients, a cationic tamarind gum and a surfactant, which are mixed prior to use, but, for most convenient handling, the two ingredients are dissolved in water to form a concentrate suitable for further dilution, foaming and injection. Typically, the concentrate will comprise from 2-60%, preferably from 15-50%, by weight of surfactant plus cationic tamarind gum. This concentrate is diluted for use with water and it is then foamed by conventional means to give a foam which can have 2-30 times the volume of the aqueous composition prior to foaming.

In use, the aqueous composition, foamed by conventional means, can be injected from ports in the cutting head into the stratum being bored and/or sprayed on the contents of the excavation chamber, which is then taken out of the excavation chamber for disposal.

Application rates will depend upon the soil to be conditioned and the degree of plasticity desired. Typically, the volume of foam injected/applied is from about 100 to about 1200 L, preferably from about 200 to about 800 L, per cubic meter of soil.

The following Examples serve to illustrate the stability of the foam obtained with the aqueous compositions according to the invention.

### EXAMPLES

### Characterization Methods

The Brookfield® RV viscosity (RV Visc., mPa*s) of the cationic tamarinds and de-oiled tamarind gum was measured on a 4.0 % by weight solution in water at 20 °C and 20 rpm. The RV viscosity of the tamarind gums was determined on a 5.0 % by weight solution in water at 20 °C and 20 rpm. The RV viscosity of the cationic guar, cationic cassia and xanthan gum was measured on a 1.0 % by weight solution in water at 20 °C and 20 rpm.

The Brookfield® LV viscosity of the carboxymethyl cellulose was determined on a 1 % by weight solution in water at 20 °C and 30 rpm. The pH of the derivatives of polysaccharides was determined by the same solutions used for the viscosity measurement.

The foam volume (FV) and the foam stability (FS) were determined by stirring for 60 seconds at high speed with a Waring Blender 100 mL of a 2 % by weight solution in tap water of the various concentrates of the Examples (the concentration of this solution is equivalent to those commonly used on-field). The foamed composition is then transferred in a graded cylinder for the evaluation of the foam volume and the stability of the foam.

FV represent the volume in mL of foam at the end of the stirring. FS is the time in minutes required to the foamed solution to regenerate 50 mL of liquid. The longer the time the higher the stability of the foam.

The Brookfield® LV viscosity (LV Visc., mPa*s) of the 2 %wt solutions was determined at 25 °C and 30 rpm.

### Ingredients

Table 1 reports the various foam stabilizing agents used in the Examples together with their characteristics.

**Table 1**

| | **Identity** | **DS** | **RV Visc.** | **pH** |
|---|---|---|---|---|
| Example 1 | Cationic Tamarind Gum | 0.29 | 320 | 5.19 |
| Example 2 | Cationic Tamarind Gum | 0.21 | 640 | 5.39 |
| Example 3 | Cationic Tamarind Gum | 0.27 | 154 | 5.35 |
| Example 4 | Cationic Tamarind Gum | 0.2 | 404 | 5.95 |
| Example 5 | Cationic Tamarind Gum | 0.25 | 576 | 6.8 |
| Example 6* | Tamarind Gum | - | 18400 | - |
| Example 7^{*} | Deoiled Tamarind Gum | - | 5800 | - |
| Example 8^{*} | Depolymerized Cationic guar | 0.19 | 47 | |
| Example 9^{*} | Cationic Cassia | 0.37 | 90 | 5.88 |
| Example 10* | Cationic Guar | 0.16 | 1790 | 9.15 |
| Example 11* | Xanthan Gum | - | 3360 | - |
| Example 12* | Carboxymethyl Cellulose | 0.86 | 1500^{a} | 9.20 |
| Example 13* | Methyl Hydroxyethyl Cellulose** | - | - | - |
| Example 14* | MIX*** | - | - | - |

| | | | | |
|---|---|---|---|---|
| * Comparative ** Walocel MKX 25000 PF 25 L, from DOW *** MIX= mixture 50/50 carboxymethyl cellulose/methyl hydroxyethyl cellulose ^{a} LV Brookfield Viscosity of a 1 % wt water solution | | | | |

The active content of the cationic tamarind gum was comprised in the range from 65 to 75 % wt, while for the cationic polygalactomannans it was in the range from 75 to 80 % wt. The xanthan gum had a active content around 85-90 % wt. The carboxymethyl cellulose is a purified CMC and has a active content >95 % wt.

The other ingredients were:
- Sodium Laureth Sulfate (CAS: 9004-82-4; 27 % wt in water, Surfactant 1);
- Sodium Lauryl Sulfate (29 % wt in water, Surfactant 2);
- Sodium Laureth Sulfate (CAS 68891-38-3; 70 % wt in water, Surfactant 3);
- C₁₂-C₁₄ Linear Alcohol;
- Triethylene Glycol Monobutyl Ether (BTG);
- Hexylene Glycol.

### Performance Tests

All the conditioning agents of the Examples were prepared by simply mixing the various ingredients.

Two concentrates containing 73 % wt of Surfactant 1, 1 % wt of the foam stabilizing agents of Example 5 and of the comparative Example 11 and up to 100 % wt of water were prepared.

A concentrate (Blank) comprising only the surfactant (73 % wt) and water was also prepared.

Table 2 reports the foam volume (FV) and the foam stability (FS) values obtained from these three concentrates after dilution according to the method described above.

**Table 2**

| | **Blank** | **Example 11*** | **Example** 5 |
|---|---|---|---|
| **PS (mL)** | 340 | 300 | 540 |
| **TS (min)** | 2'40" | 3'48" | 5'21" |

| | | | |
|---|---|---|---|
| *Comparative | | | |

The cationic tamarind gum shows significantly better overall performance compared to the xanthan gum.

In order to evaluate the behaviour of different cationic tamarind gums, concentrates according to the recipe of Table 3 were prepared. The cationic tamarind of Examples 1-4 were used.

**Table 3**

| **Ingredient** | **% wt** |
|---|---|
| Hexylene Glycol | 7.00 |
| Surfactant 1 | 43 |
| Cₗ₂-Cₗ₄ Linear Alcohol | 0.50 |
| Foam Stabilizing Agent | 0.50 |
| Water | up to 100 |

The performance of the diluted concentrates are reported in Table 4.

**Table 4**

| | **Example 1** | **Example 2** | **Example 3** | **Example 4** |
|---|---|---|---|---|
| **FV (mL)** | 580 | 580 | 560 | 540 |
| **FS (min)** | 9' | 7'20" | 8' | 7' |

The values of FV and FS demonstrate the performances of the foaming compositions according to the invention can be increased by adding a foam booster and by opportunely choosing the cationic tamarind.

Table 5 shows the performances of the concentrates obtained with the foam stabilizing agents of Example 1 and comparative Examples 6-10. The concentrates were prepared using the same amount of ingredients of Table 3, with the exception of the foam stabilizing agents for which a concentration of 1 % wt was used.

**Table 5**

| | **Ex. 1** | **Ex. 8*** | **Ex. 9*** | **Ex. 10*** | **Ex. 6*** | **Ex. 7*** | **Ex. 12*** | **Ex. 13*** | **Ex. 14*** |
|---|---|---|---|---|---|---|---|---|---|
| **FV (mL)** | 600 | 330 | 460 | 570 | 460 | 410 | 350 | 330 | 380 |
| **FS (min)** | 8' | 3'33" | 5'26" | 7'30" | 4'50" | 4'25" | 4'53" | 3'55" | 4'30" |
| **LV Visc.** | 38 | 27 | 35 | 2000 | 20 | 20 | 3000 | 4100 | 2000 |

| | | | | | | | | | |
|---|---|---|---|---|---|---|---|---|---|
| *Comparative | | | | | | | | | |

The comparison between the performances of the cationic tamarind and the tamarind gums demonstrates that the introduction of a cationic group on the polysaccharidic chain increase both the volume cationic and its stability. Moreover the results of the different cationic polysaccharides confirm that the tamarind gums give better overall performances than polygalactomannans. The closest values of FV and FS were obtained with the comparative concentrate containing the cationic guar of Example 10, which, however, gives to the diluted solution a viscosity too high for the application. The cellulose derivatives showed both worse overall performances and high viscosity.

Finally, the performances in the presence of different surfactants were evaluated. The test were performed diluting and foaming concentrates prepared with the Surfactant 1-3 (43 %wt, 40 % wt and 16 % wt for Surfactant 1, 2 and 3 respectively), 7 % wt of BTG, 1 % wt of the foam stabilizing agent of Example 1 and up to 100 % wt of water.

Table 6 reports the values of FV and FS obtained from these test.

**Table 6**

| | **Surfactant 1** | **Surfactant 2** | **Surfactant 3** |
|---|---|---|---|
| FV(mL) | 600 | 550 | 510 |
| FS (min) | 8' | 11'20" | 6'50" |

## Claims

1. A method of boring through subterranean formations utilizing a shield boring machine, said method comprising the use of a foamed aqueous composition comprising: (a) from 0.002 to 4.0 % by weight (% wt) of a cationic tamarind gum and (b) from 0.05 to 6.0 % by weight of a surfactant.

2. The method of claim 1), wherein said aqueous composition comprises:
(a) from 0.005 to 3.0 % wt of a cationic tamarind gum and (b) from 0.1 to 5.0 % wt of a surfactant.

3. The method of claim 1), wherein said cationic tamarind gum has a cationic degree of substitution (DS_{cat}) from 0.01 to 1.0 and a Brookfield RV viscosity at 4.0 % wt water solution, 20 rpm and 20 °C below 2000 mPa*s.

4. The method of claim 3), wherein said cationic tamarind gum has a DS_{cat} from 0.05 to 0.55 and a Brookfield RV viscosity, at 4.0 % wt water solution, 20 rpm and 20 °C, of from 15 to 1500 mPa*s.

5. The method of claim 1), wherein said surfactant is an anionic surfactant.

6. The method of claim 5), wherein said anionic surfactant is chosen among polyalkoxylated surfactants which are ionically modified, alkali metal and alkaline earth metal salts of sulfate or phosphate ester of C₈-C₂₄ saturated and unsaturated aliphatic alcohols, and mixture therof.

7. The method of claim 1), wherein said aqueous composition further comprises:
c) from 0.01 to 10 % by weight of a foam booster.

8. The method of claim 7), wherein said foam booster is chosen among n-dodecyl alcohol, n-tetradecyl alcohol, n-hexadecyl alcohol, cetyl alcohol, N-lauramine oxide, N-myristamine oxide, hexylene glycol, diethylene glycol monobutyl ether, triethylene glycol monobutyl ether, and mixtures thereof.

## Patentansprüche

1. Verfahren zum Bohren durch unterirdische Formationen unter Verwendung einer Schildbohrmaschine, wobei das Verfahren die Verwendung einer geschäumten, wässrigen Zusammensetzung umfasst, die Folgendes umfasst: (a) 0,002 bis 4,0 Gew.-% eines kationischen Tamarindengummis und (b) 0,05 bis 6,0 Gew.-% eines Tensids.

2. Verfahren nach Anspruch 1, wobei die wässrige Zusammensetzung Folgendes umfasst:
(a) 0,005 bis 3,0 Gew.-% eines kationischen Tamarindengummis und (b) 0,1 bis 5,0 Gew.-% eines Tensids.

3. Verfahren nach Anspruch 1, wobei der kationische Tamarindengummi einen kationischen Substitutionsgrad (DS_{cat}) von 0,01 bis 1,0 und eine bei 4,0 Gew-% Wasserlösung, 20 UpM und 20 °C mit einem Brookfield-RV-Viskosimeter gemessene Viskosität von unter 2000 mPa·s aufweist.

4. Verfahren nach Anspruch 3, wobei der kationische Tamarindengummi einen DS_{cat} von 0,05 bis 0,55 und eine bei 4,0 Gew-% Wasserlösung, 20 UpM und 20 °C mit einem Brookfield-RV-Viskosimeter gemessene Viskosität von 15 bis 1500 mPa·s aufweist.

5. Verfahren nach Anspruch 1, wobei das Tensid ein anionisches Tensid ist.

6. Verfahren nach Anspruch 5, wobei das anionische Tensid ausgewählt ist aus polyalkoxylierten Tensiden, die ionisch modifiziert sind, Alkalimetall- und Erdalkalimetallsalzen von Sulfat- oder Phosphatestern von gesättigten und ungesättigten aliphatischen C₈-C₂₄-Alkoholen und Mischungen davon.

7. Verfahren nach Anspruch 1, wobei die wässrige Zusammensetzung ferner Folgendes umfasst:
c) 0,01 bis 10 Gew.-% eines Schaumverstärkers.

8. Verfahren nach Anspruch 7, wobei der Schaumverstärker ausgewählt ist aus n-Dodecylalkohol, n-Tetradecylalkohol, n-Hexadecylalkohol, Cetylalkohol, N-Lauraminoxid, N-Myristaminoxid, Hexylenglykol, Diethylenglykolmonobutylether, Triethylenglykolmonobutylether und Mischungen davon.

## Revendications

1. Procédé de forage à travers des formations souterraines en utilisant une machine de forage à bouclier, ledit procédé comprenant l'utilisation d'une composition aqueuse en forme de mousse comprenant : (a) de 0,002 à 4,0 % en poids d'une gomme de tamarin cationique et (b) de 0,05 à 6,0 % en poids d'un agent tensioactif.

2. Procédé selon la revendication 1), dans lequel ladite composition aqueuse comprend :
(a) de 0,005 à 3,0 % en poids d'une gomme de tamarin cationique et (b) de 0,1 à 5,0 % en poids d'un agent tensioactif.

3. Procédé selon la revendication 1), dans lequel ladite gomme de tamarin cationique a un degré de substitution cationique (DS_{cat}) de 0,01 à 1,0 et une viscosité Brookfield RV à 4,0 % en poids en solution aqueuse, à 20 tr/min et 20 °C, inférieure à 2000 mPa*s.

4. Procédé selon la revendication 3), dans lequel ladite gomme de tamarin cationique a un DS_{cat} de 0,05 à 0,55 et une viscosité Brookfield RV, à 4,0 % en poids de solution aqueuse, à 20 tr/min et 20 °C, de 15 à 1500 mPa*s.

5. Procédé selon la revendication 1), dans lequel ledit agent tensioactif est un agent tensioactif anionique.

6. Procédé selon la revendication 5), dans lequel ledit agent tensioactif anionique est choisi parmi les agents tensioactifs polyalcoxylés qui sont modifiés ioniquement, les sels de métaux alcalins et de métaux alcalino-terreux d'esters sulfates ou phosphates d'alcools aliphatiques saturés et insaturés en C₈-C₂₄, et leurs mélanges.

7. Procédé selon la revendication 1), dans lequel ladite composition aqueuse comprend en outre :
c) de 0,01 à 10 % en poids d'un renforçateur de mousse.

8. Procédé selon la revendication 7), dans lequel ledit renforçateur de mousse est choisi parmi l'alcool n-dodécylique, l'alcool n-tétradécylique, l'alcool n-hexadécylique, l'alcool cétylique, l'oxyde de N-lauramine, l'oxyde de N-myristamine, l'hexylèneglycol, l'éther monobutylique de diéthylèneglycol, l'éther monobutylique de triéthylèneglycol et leurs mélanges.
